# EUROPÄISCHE PATENTANMELDUNG

(11) **EP 2 085 162 A1**
(43) Veröffentlichungstag der Anmeldung: **05.08.2009**
(21) Anmeldenummer: 08001881.5
(22) Anmeldetag: 01.02.2008
(51) Int. Cl.: B21D 5/02, G01B 5/24

(54) **Bearbeitungsmaschine und Verfahren zum Abkanten von Werkstücken**

(71) Anmelder: TRUMPF Werkzeugmaschinen GmbH + Co. KG, 71254 Ditzingen (DE)
(72) Erfinder: Bauer, Andreas, 71665 Vaihingen/Enz (DE); Dorsch, Lasse, 71672 Marbach (DE)
(74) Vertreter: Kohler Schmid Möbus

(57) **Zusammenfassung**

Die Erfindung betrifft eine Bearbeitungsmaschine zum Abkanten von Werkstücken (14), insbesondere von Blechen, mit einer Umformmatrize und einem mit dieser zusammenwirkenden und in einer Bearbeitungsrichtung (5) relativ zu dieser bewegbaren Umformstempel (8) zur Beaufschlagung des Werkstücks (14), um zwei Schenkel (15, 16) des Werkstücks (14) unter einem Biegewinkel (β) gegeneinander zu biegen, sowie mit mindestens einem drehbar gelagerten Tastelement (19a, 20a) einer Biegewinkelmesseinrichtung (18). Das Tastelement (19a, 20a) stützt sich in einer Messstellung nur an einem Schenkel (15) des Werkstücks (14) ab und führt bei einer Veränderung des Biegewinkels (β) eine Rollbewegung entlang des Schenkels (15) des Werkstücks (14) aus. Die Erfindung betrifft auch ein zugehöriges Verfahren zum Abkanten von Werkstücken (14).

## Beschreibung

Die Erfindung betrifft eine Bearbeitungsmaschine zum Abkanten von Werkstücken, insbesondere von Blechen, mit einer Umformmatrize und einem mit dieser zusammenwirkenden und in einer Bearbeitungsrichtung relativ zu dieser bewegbaren Umformstempel zur Beaufschlagung des Werkstücks, um zwei Schenkel des Werkstücks unter einem Biegewinkel gegeneinander zu biegen, sowie mit mindestens einem drehbar gelagerten Tastelement einer Biegewinkelmesseinrichtung. Die Erfindung betrifft weiterhin ein Verfahren zum Abkanten von Werkstücken, insbesondere von Blechen, bei dem an dem Werkstück unter Beaufschlagung mit einem Umformstempel und/oder einer mit diesem zusammenwirkenden und in einer Bearbeitungsrichtung relativ zu diesem bewegbaren Umformmatrize zwei Schenkel des Werkstücks unter einem Biegewinkel gegeneinander gebogen werden, wobei für die Messung des Biegewinkels ein drehbar gelagertes Tastelement vorgesehen ist.

Eine solche Bearbeitungsmaschine und ein solches Verfahren sind beispielsweise aus der EP 0 775 028 B1 der Anmelderin bekannt geworden. Dort sind in einer Ausführung zwei scheibenförmige Tastelemente zur Messung des Biegewinkels vorgesehen, die sich in einer Messstellung jeweils an den beiden Schenkeln des Werkstücks abstützen. Zwei Schieber, an denen die Tastelemente mittels Schwenkachsen angelenkt sind, dienen als Führungen für die Tastelemente. Aufgrund der Schwenkbeweglichkeit sind die Tastelemente in einer Ebene senkrecht zur Umformkante des Umformstempels auslenkbar und dienen deren Selbstzentrierung in Fällen, in denen eine Achse der Bewegung der Tastelemente in Bearbeitungsrichtung, die durch einer Veränderung des Biegewinkels hervorgerufen wird, nicht mit der Winkelhalbierenden des Biegewinkels zusammenfällt. Die scheibenförmigen Tastelemente gleiten bei ihrer Bewegung in Bearbeitungsrichtung an den beiden Schenkeln des Werkstücks entlang.

Aus der EP 1 118 399 A1 ist eine Vorrichtung zur Messung des Biegewinkels eines Werkstücks bekannt geworden, bei der sich zwei in Bearbeitungsrichtung bewegliche, stabförmige Tastelemente in der Messstellung am selben Schenkel des Werkstücks, aber in unterschiedlichem Abstand zur Umformkante des Umformstempels abstützen, um einen Anteil des Biegewinkels zu messen, der zwischen dem Schenkel des Werkstücks und der Bearbeitungsrichtung gebildet ist. Ein weiteres stabförmiges Tastelement stützt sich in der Messstellung am anderen Schenkel des Werkstücks ab, um einen zweiten Anteil des Biegewinkels zu messen.

Die NL 8 105 266 A beschreibt einen Biegewinkelsensor, der eine in Bearbeitungsrichtung bewegliche rechteckige Platte mit abgerundeten Kanten als Tastelement aufweist, die sich in einer Messstellung an den beiden Schenkeln des abgekanteten Werkstücks abstützt. Während des Biegevorgangs wird die Bewegung der Platte in Bearbeitungsrichtung relativ zum Umformstempel gemessen, um daraus über eine trigonometrische Beziehung den Biegewinkel zu ermitteln.

Bei den oben beschriebenen Einrichtungen zum Messen des Biegewinkels kann bei ungünstiger Beschaffenheit des Werkstücks, insbesondere wenn eine Verkippung des Werkstücks vorliegt, das mindestens eine Tastelement gegebenenfalls nicht mehr im Blechwinkel an dem Werkstück anliegen, was zu Messfehlern bei der Ermittlung des Biegewinkels führt.

### Aufgabe der Erfindung

Es ist die Aufgabe der vorliegenden Erfindung, eine Bearbeitungsmaschine und ein Verfahren der eingangs genannten Art dahingehend weiterzubilden, dass die Messung des Biegewinkels mit höherer Präzision erfolgen kann.

### Gegenstand der Erfindung

Diese Aufgabe wird erfindungsgemäß gelöst durch eine Bearbeitungsmaschine der eingangs genannten Art, bei der sich das Tastelement in einer Messstellung nur an einem Schenkel des Werkstücks abstützt und bei einer Veränderung des Biegewinkels eine Rollbewegung entlang des Schenkels des Werkstücks ausführt.

Die Erfinder haben erkannt, dass die Messungenauigkeiten bei der Bestimmung des Biegewinkels im Stand der Technik auf zu starke Reibungskräfte zwischen dem Tastelement und dem Werkstück bei der gleitenden Bewegung des Tastelements entlang des Werkstücks zurückzuführen sind. Erfindungsgemäß wird vorgeschlagen, die Reibung dadurch zu vermindern, dass das Tastelement eine Rollbewegung entlang des Werkstücks ausführt. Hierzu ist es erforderlich, dass sich das Tastelement nur an einem Schenkel des Werkstücks abstützt, da bei einer Abstützung an beiden Schenkeln bei einer Veränderung des Biegewinkels typischer Weise eine gleitende Bewegung des Tastelements erfolgt.

In einer bevorzugten Ausführungsform weist die Bearbeitungsmaschine wenigstens ein Halterungselement auf, an dem das Tastelement drehbar gelagert ist, wobei das Halterungselement in Bearbeitungsrichtung relativ zu dem Umformstempel und/oder der Umformmatrize bewegbar ist. Das Halterungselement wird bei einer Veränderung des Biegewinkels in bzw. entgegen der Bearbeitungsrichtung bewegt. Diese Bewegung des Halterungselements kann zur Bestimmung des Biegewinkels gemessen werden, wie weiter unten ausführlicher dargestellt ist.

In einer vorteilhaften Weiterbildung ist ein weiteres Tastelement an dem Halterungselement drehbar gelagert, wobei sich das weitere Tastelement in der Messstellung nur an dem anderen Schenkel des Werkstücks abstützt. Mit Hilfe von zwei Tastelementen, die sich an den gegenüberliegenden Schenkeln des Werkstücks abstützen, kann der gesamte Biegewinkel mittels eines einzigen Halterungselements gemessen werden, wenn die relative Lage des Halterungselements zur Umformkante des Umformstempels bekannt ist. Für Details dieser Berechnung sei auf die eingangs erwähnte NL 8105266 A verwiesen. Es versteht sich, dass alternativ an dem Halterungselement auch nur ein einziges drehbar gelagertes Tastelement vorgesehen sein kann, z.B. wenn zur Messung des Biegewinkels eine Anordnung wie in der eingangs zitierten EP 1 118 399 A1 zum Einsatz kommt.

Bevorzugt sind das Tastelement und das weitere Tastelement an dem Halterungselement in konstantem Abstand zueinander gelagert. Durch den konstanten Abstand der in der Messstellung an den Schenkeln des Werkstücks anliegenden Tastelemente wird bei einer Veränderung des Biegewinkels eine Bewegung des Halterungselements in Bearbeitungsrichtung erzeugt.

In einer bevorzugten Weiterbildung weist die Bearbeitungsmaschine wenigstens zwei Halterungselemente auf, die in Bearbeitungsrichtung relativ zueinander bewegbar sind. In diesem Fall kann aus der Relativbewegung der Halterungselemente der Biegewinkel berechnet werden, wie in der eingangs genannten EP 0 775 028 B1 der Anmelderin dargestellt ist, die bezüglich dieses Aspekts durch Bezugnahme zum Inhalt dieser Anmeldung gemacht wird.

Vorteilhaft ist eine Lagerung des wenigstens einen Halterungselements in einer Führung des Umformstempels zur Bewegung in Bearbeitungsrichtung. Die Führung kann durch einen in dem Umformstempel gebildeten Führungsschlitz realisiert sein, in dem ein Schieber der Halterungseinrichtung in Bearbeitungsrichtung bewegbar geführt ist. Dem Schieber kommt weiterhin die Aufgabe zu, das Halterungselement gegen ein Herausfallen aus dem Führungsschlitz zu sichern.

Bevorzugt ist das Halterungselement plattenförmig ausgebildet. In diesem Fall kann die Führung der Halterungseinrichtung an dem Umformstempel eine geringe Weite in Richtung der Umformkante aufweisen, so dass die Umformkante im Bereich des bzw. der Führungsschlitze nur über eine geringe Länge unterbrochen wird und so das mit dem Umformstempel erzielbare Bearbeitungsergebnis in seiner Qualität nicht beeinträchtigt wird.

In einer vorteilhaften Ausführungsform ist das Tastelement als Rolle ausgebildet. Ein rollenförmiges Tastelement ermöglicht ein Abrollen auf dem Schenkel des Werkstücks unter Einhaltung eines konstanten Abstands zwischen der sich an dem Schenkel abstützenden Außenkante der Rolle und deren Drehachse, so dass die Messung des Biegewinkels nicht von der Drehbewegung des Tastelements beeinflusst wird.

Die Erfindung betrifft auch ein Verfahren der eingangs genannten Art, bei dem sich das Tastelement in einer Messstellung nur an einem Schenkel des Werkstücks abstützt und bei einer Veränderung des Biegewinkels eine Rollbewegung entlang des Schenkels des Werkstücks ausführt. Ein solches Verfahren ermöglicht eine vorteilhafte Messung des Biegewinkels, da die Reibung des Tastelements an dem Werkstück durch die Rollbewegung gegenüber der im Stand der Technik üblichen Gleitbewegung verringert ist.

In einer vorteilhaften Variante ist das Tastelement an einem Halterungselement drehbar gelagert, das bei der Veränderung des Biegewinkels relativ zu dem Umformstempel und/oder der Umformmatrize in Bearbeitungsrichtung bewegt wird. Die Bewegung des Halterungselements in Bearbeitungsrichtung kann zur Messung des Biegewinkels ausgewertet werden, wie oben beschrieben ist.

In einer bevorzugten Variante nimmt das Tastelement die Messstellung während einer auf das Biegen des Werkstücks folgenden Entlastung des Werkstücks von dem Umformstempel und/oder von der Umformmatrize ein. Bei der Entlastung des Werkstücks vergrößert sich der Biegewinkel aufgrund von in dem Werkstück wirksamen elastischen Rückstellkräften. Mittels des oben beschriebenen Verfahrens kann eine kontinuierliche Messung des Biegewinkels bei der Entlastung erfolgen, wobei eine vollständige Entlastung des Werkstücks dadurch angezeigt wird, dass der Biegewinkel sich nicht mehr verändert. Wenn der vollständig entlastete Zustand des Werkstücks mittels des Biegewinkelsensors erkannt wurde, kann die Bewegung des Umformstempels bzw. der Umformmatrize gestoppt werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine perspektivische Gesamtansicht einer Ausführungsform einer erfindungsgemäßen Bearbeitungsmaschine, und
- Fig. 2: einen Schnittdarstellung in der Draufsicht auf die Schnittebene II in Figur 1 bei teilweise von einem Druckstempel entlasteten Werkstück.

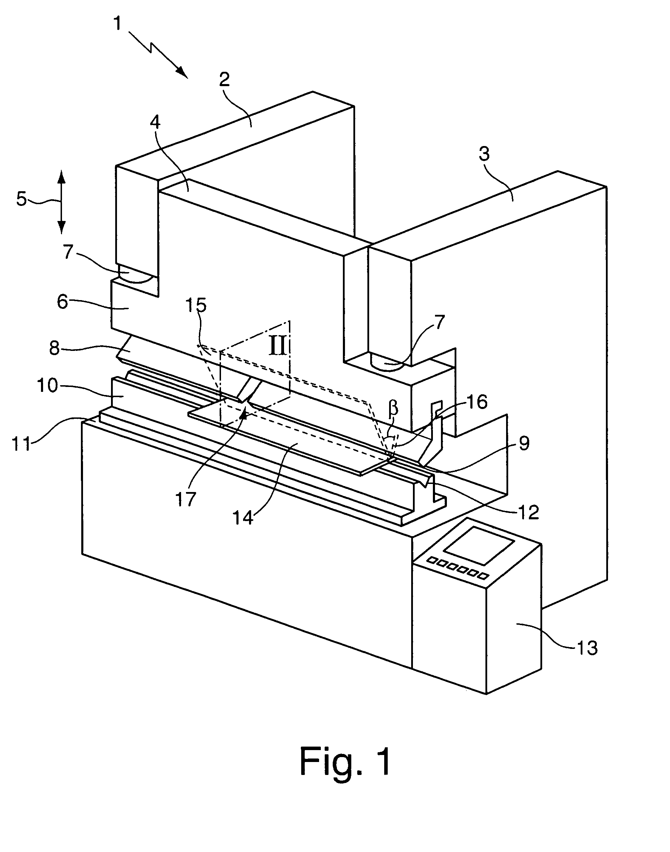

**Fig. 1** zeigt eine Bearbeitungsmaschine **1** in Form einer Gesenkbiegepresse, die ein Maschinengestell mit zwei Ständern **2, 3** umfasst. Zwischen den Ständern 2, 3 ist eine Oberwange **4** in einer durch einen Doppelpfeil **5** veranschaulichten vertikalen Bearbeitungsrichtung heb- und senkbar geführt. Die Oberwange **4** geht an ihrem unteren Ende in einen Preßbalken **6** über, der sich über die gesamte Maschinenfront erstreckt. Zum Anheben und Absenken der Oberwange **4** dienen hydraulische Preßzylinder **7,** die an dem Preßbalken 6 angreifen. In einer hinterschnittenen Längsnut des Preßbalkens 6 ist ein leistenartiger Umformstempel **8** in Form eines durchgehenden Biegestempels gehalten, der nach unten hin in einer Umformkante **9** endet. Der Umformstempel 8 wirkt mit einer als Biegegesenk ausgebildeten Umformmatrize **10** zusammen. Letztere ist auf einem Tisch **11** der Bearbeitungsmaschine 1 gelagert und weist an ihrer dem Umformstempel 8 zugewandten Seite eine V-förmige Nut **12** auf.

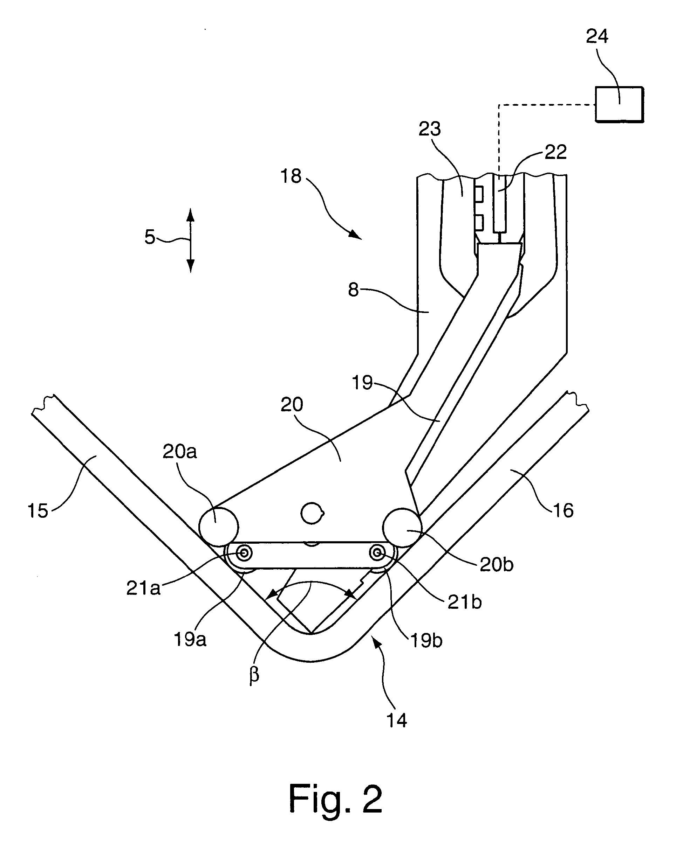

In einem Bedienpult **13** sind die Antriebssteuerung der Bearbeitungsmaschine 1 sowie sonstige Einrichtungen zum automatisierten Maschinenbetrieb untergebracht, im Rahmen dessen ein Werkstück **14** in Form einer Blechtafel abgekantet wird. In seiner Ausgangslage ist das Werkstück 14 in Fig. 1 mit ausgezogenen Linien dargestellt. In seinem abgekanteten Zustand, in dem es zwei einen Biegewinkel β einschließende Schenkel **15, 16** aufweist, ist das Werkstück 14 gestrichelt angedeutet. In Fig. 1 ebenfalls dargestellt ist ein Spalt **17** in dem Umformstempel 8, an dem eine in Fig. 2 gezeigte Biegewinkelmesseinrichtung **18** angeordnet ist.

Die Biegewinkelmesseinrichtung 18 ist in Fig.2 zu einem Zeitpunkt dargestellt, zu dem sich der Umformstempel 8 in einer Lage befindet, in der nach dem Abkanten bereits eine teilweise Entlastung des Werkstücks 14 erfolgt ist. Die Biegewinkelmesseinrichtung 18 weist ein erstes und zweites plattenförmiges Halterungselement **19, 20** auf, an denen jeweils zwei rollenförmige Tastelemente **19a, 19b, 20a, 20b** drehbar an zugehörigen Gleitlagern gelagert sind, von denen nur die zu den Tastelementen 19a, 19b des ersten Halterungselements 19 gehörigen Gleitlager **21a, 21b** in Fig. 2 gezeigt sind. Der Abstand der Gleitlager 21a, 21 b ist konstant, so dass die Tastelemente 19a, 19b des ersten Halterungselements 19 keine Relativbewegung zueinander ausführen können. Gleiches gilt für die (nicht gezeigten) Gleitlager der Tastelemente 20a, 20b des zweiten Halterungselements 20, die in einem größeren Abstand angeordnet sind als die Gleitlager 19a, 19b des ersten Halterungselements 19. Die rollenförmigen Tastelemente 19a, 19b, 20a, 20b stützen sich in der in Fig. 2 gezeigten Messstellung jeweils an einem der Schenkel 15, 16 des Werkstücks ab und führen bei einer Veränderung des Biegewinkels β eine Rollbewegung entlang dieses Schenkels 15, 16 aus.

Bei der Rollbewegung der Tastelemente 19a, 19b, 20a, 20b werden die Halterungselemente 19, 20 in Bearbeitungsrichtung 5 verschoben. Um das zweite Halterungselement 20 bei dieser Verschiebung in Bearbeitungsrichtung 5 zu führen, weist dieses an seinem oberen Ende einen Schieber **22** auf, an dem es in einem in dem Umformstempel 8 gebildeten Führungsschlitz **23** verschiebbar gelagert ist. Eine entsprechende Lagerung ist in dem Umformstempel 8 auch für das erste Halterungselement 19 vorgesehen. Bei einer Verringerung des Biegewinkels β wird die Kraft erhöht, welche die Schenkel 15, 16 des Werkstücks 14 auf die Halterungselemente 19, 20 ausüben, so dass diese nach oben gedrückt werden. Erhöht sich der Biegewinkel β, so reduziert sich diese Kraft und die Halterungselemente 19, 20 bewegen sich nach unten. Aus einer Messung der Positionen den Halterungselemente 19, 20 in Bearbeitungsrichtung, die beispielsweise über eine Positionsmessung der Schieber in der Führung des Umformstempels 8 erfolgen kann, sowie durch Differenzbildung der gemessenen Positionen der Halterungselemente 19, 20 kann in einer Auswerteeinrichtung **24** der Biegewinkelmesseinrichtung 18 der Biegewinkel β bestimmt werden, wie ausführlich in der eingangs zitierten EP 0 775 028 B1 der Anmelderin dargestellt ist.

Es versteht sich, dass die Verwendung von Tastelementen, die eine Rollbewegung entlang eines Schenkels eines abgekanteten Werkstücks ausführen, nicht auf die oben beschriebene Bearbeitungsmaschine bzw. den oben beschriebenen Biegewinkelsensor beschränkt sind. Beispielsweise kann der Biegewinkelsensor, sofern zusätzlich die Bewegung des Umlenkstempels in Bearbeitungsrichtung gemessen wird, nur eine einzige Halterungseinrichtung aufweisen. Auch kann auf die oben beschriebene Weise eine Biegewinkelmessung auch bei abgekanteten Werkstücken mit anderen Formen als der oben gezeigten V-Form erfolgen, beispielsweise bei abgekanteten Werkstücken mit U-Form. Auch müssen nicht zwingend wie oben gezeigt an einem Halterungselement zwei Tastelemente vorgesehen sein; vielmehr ist auch die Verwendung von stabförmigen Halteeinrichtungen mit einem einzigen Tastelement möglich.

## Patentansprüche

1. Bearbeitungsmaschine (1) zum Abkanten von Werkstücken (14), insbesondere von Blechen, mit einer Umformmatrize (10) und einem mit dieser zusammenwirkenden und in einer Bearbeitungsrichtung (5) relativ zu dieser bewegbaren Umformstempel (8) zur Beaufschlagung des Werkstücks (14), um zwei Schenkel (15, 16) des Werkstücks (14) unter einem Biegewinkel (β) gegeneinander zu biegen, sowie mit mindestens einem drehbar gelagerten Tastelement (19a, 20a) einer Biegewinkelmesseinrichtung (18),
**dadurch gekennzeichnet,**
**dass** sich das Tastelement (19a, 20a) in einer Messstellung nur an einem Schenkel (15) des Werkstücks (14) abstützt und bei einer Veränderung des Biegewinkels (β) eine Rollbewegung entlang des Schenkels (15) des Werkstücks (14) ausführt.

2. Bearbeitungsmaschine nach Anspruch 1 mit wenigstens einem Halterungselement (19, 20), an dem das Tastelement (19a, 20a) drehbar gelagert ist, wobei das Halterungselement (19, 20) in Bearbeitungsrichtung (5) relativ zu dem Umformstempel (8) und/oder der Umformmatrize (10) bewegbar ist.

3. Bearbeitungsmaschine nach Anspruch 2, bei der ein weiteres Tastelement (19b, 20b) an dem Halterungselement (19, 20) drehbar gelagert ist, wobei sich das weitere Tastelement (19b, 20b) in der Messstellung nur an dem anderen Schenkel (16) des Werkstücks (14) abstützt.

4. Bearbeitungsmaschine nach Anspruch 3, bei der das Tastelement (19a, 20a) und das weitere Tastelement (19b, 20b) an dem Halterungselement (19, 20) in konstantem Abstand zueinander gelagert sind.

5. Bearbeitungsmaschine nach einem der Ansprüche 2 bis 4 mit wenigstens zwei Halterungselementen (19, 20), die in Bearbeitungsrichtung (5) relativ zueinander bewegbar sind.

6. Bearbeitungsmaschine nach einem der Ansprüche 2 bis 5, bei der zur Bewegung in Bearbeitungsrichtung (5) das wenigstens eine Halterungselement (19, 20) in einer Führung (22) des Umformstempels (8) gelagert ist.

7. Bearbeitungsmaschine nach einem der Ansprüche 2 bis 6, bei der das Halterungselement (19, 20) plattenförmig ausgebildet ist.

8. Bearbeitungsmaschine nach einem der vorhergehenden Ansprüche, bei der das Tastelement (19a, 20a) als Rolle ausgebildet ist.

9. Verfahren zum Abkanten von Werkstücken (14), insbesondere von Blechen, bei dem an dem Werkstück (14) unter Beaufschlagung mit einem Umformstempel (8) und/oder einer mit diesem zusammenwirkenden und in einer Bearbeitungsrichtung (5) relativ zu diesem bewegbaren Umformmatrize (10) zwei Schenkel (15, 16) des Werkstücks (14) unter einem Biegewinkel (β) gegeneinander gebogen werden, wobei für die Messung des Biegewinkels (β) ein drehbar gelagertes Tastelement (19a, 20a) vorgesehen ist,
**dadurch gekennzeichnet,**
**dass** sich das Tastelement (19a, 20a) in einer Messstellung nur an einem Schenkel (15) des Werkstücks (14) abstützt und bei einer Veränderung des Biegewinkels (β) eine Rollbewegung entlang des Schenkels (15) des Werkstücks (14) ausführt.

10. Verfahren nach Anspruch 9, bei dem das Tastelement (19a, 20a) an einem Halterungselement (19, 20) drehbar gelagert ist, das bei der Veränderung des Biegewinkels (β) relativ zu dem Umformstempel (8) und/oder der Umformmatrize (10) in Bearbeitungsrichtung (5) bewegt wird.

11. Verfahren nach Anspruch 9 oder 10, bei dem das Tastelement (19a, 20a) die Messstellung während einer auf das Biegen des Werkstücks (14) folgenden Entlastung des Werkstücks (14) von dem Umformstempel (8) und/oder von der Umformmatrize (10) einnimmt.
